# EUROPÄISCHE PATENTSCHRIFT

(11) **EP 0 646 699 B1**
(45) Veröffentlichungstag und Bekanntmachung des Hinweises auf die Patenterteilung: **22.04.1998**
(21) Anmeldenummer: 93114120.4
(22) Anmeldetag: 03.09.1993
(51) Int. Cl.: F01D 25/24, F02C 6/12

(54) **Verfahren zur Anpassung der Radialturbine eines Turboladers an eine Brennkraftmaschine**
Method for adapting the radial turbine of a turbocharger on an internal combustion engine
Procédé pour adapter la turbine radiale d'un turbocompresseur sur un moteur à combustion interne

(43) Veröffentlichungstag der Anmeldung: 05.04.1995
(73) Patentinhaber: ASEA BROWN BOVERI AG, 5400 Baden (CH)
(72) Erfinder: Elvekjaer, Peter, CH-5400 Baden (CH); Gribi, Urs, CH-5452 Oberrohrdorf (CH)
(74) Vertreter: Klein, Ernest

(56) Entgegenhaltungen:
- EP-A- 0 526 965
- FR-A- 2 059 032
- FR-A- 2 197 420
- FR-A- 2 360 751

## Beschreibung

### Technisches Gebiet

Die Erfindung betrifft ein Verfahren zur Anpassung der Radialturbine eines Turboladers an eine Brennkraftmaschine.

### Stand der Technik

Es sind derartige Radialturbinen für Turbolader bekannt, die gaseintrittseitig im wesentlichen aus einem spiralförmigen Gaseintrittgehäuse und einem dieses Gehäuse zur Gasaustrittseite hin räumlich abschliessenden Düsenring bestehen. Gasaustrittseitig ist das auf der Verdichter-Antriebswelle geführte und mit Schaufeln versehene Laufrad angeordnet. Zwischen dessen Nabe und dem gegenüberliegenden Bereich des Gasaustrittgehäuses verläuft der Strömungskanal des Gases. Statt eines Gasaustrittgehäuses ist auch ein Gasaustrittflansch bekannt, der durch mehrere an seinem Umfang gleichmässig verteilte Schrauben lösbar mit dem Gaseintrittgehäuse verbunden ist.

Soll ein Turbolader einer bestimmten Brennkraftmaschine zugeordnet werden, muss man die Schluckfähigkeit der Radialturbine, d.h. die Grösse des von ihr bei einem gegebenen Maschinendurchmesser verarbeitbaren Förderstromes entsprechend anpassen.

Zu diesem Zweck ist ein Verfahren bekannt, bei dem zunächst die Schaufeln des Laufrades und die des Düsenrings entsprechend den Parametern der Brennkraftmaschine durch Materialabtrag von der Schaufelhöhe gekürzt werden. Alternativ dazu, nach Bedarf auch zusätzlich, können bzw. müssen die Anstellwinkel der Düsenringschaufeln verändert werden, d.h. es erfolgt der Einsatz von anderen Düsenringen mit dem benötigten Anstellwinkel der Schaufeln. Da Gaseintrittgehäuse und Düsenring genau aufeinander abgestimmt sind, muss anschliessend das Gaseintrittgehäuse entsprechend angepasst, d.h. ebenfalls ausgetauscht werden.

Bei diesem Verfahren erfolgt die Anpassung der Radialturbine entsprechend des veränderten Laufrades gaseintrittseitig, d.h. sowohl der Düsenring als auch das spiralförmige Gaseintrittgehäuse müssen ausgewechselt werden. Daher ist das Verfahren sehr arbeitsaufwendig und damit teuer. Aufgrund der vielen Kombinationsmöglichkeiten erfordert es eine recht hohe Lagerhaltung der entsprechenden Wechselteile und sehr umfangreiche Transportaufwendungen für das vor Ort erfolgende Anpassen des Turboladers an die entsprechende Brennkraftmaschine, was die Kosten zusätzlich erhöht.

In Sonderfällen der Anpassung eines Turboladers an eine Brennkraftmaschine, wie z.B. bei Notstromaggregaten, wo ein schnell ansprechender Turbolader benötigt wird, verringert man das Massenträgheitsmoment des Laufrades, indem ein entsprechendes Laufrad aus einem Material geringerer Masse, beispielsweise Keramik eingesetzt wird. Diese bekannten Laufräder sind jedoch sehr teuer und zudem nicht ausreichend funktionssicher.

### Darstellung der Erfindung

Die Erfindung versucht, all diese Nachteile zu vermeiden. Ihr liegt die Aufgabe zugrunde, ein Verfahren zur Anpassung der Radialturbinen von Turboladern an die jeweilige Brennkraftmaschine zu schaffen, welches mit relativ geringem Aufwand an Material und Arbeitszeit sowie niedrigen Kosten auskommt.

Erfindungsgemäss wird dies dadurch erreicht, dass die gaseintrittseitig von einem mittels eines Düsenrings räumlich abgeschlossenen Gaseintrittgehäuse und gasaustrittseitig von einem Laufrad mit einer Nabe und mehreren Schaufeln sowie einem mit dem Gaseintrittgehäuse lösbar verbundenen Gasaustrittflansch gebildete und einen zwischen der Nabe und dem Gasaustrittflansch ausgebildeten Strömungskanal aufweisende Radialturbine durch Veränderung bzw. Austausch verschiedener Bauteile entsprechend den Anschlussbedingungen der Brennkraftmaschine an diese angepasst wird, wobei ausschliesslich gasaustrittseitige Bauteile der Radialturbine verändert werden.

Das geschieht besonders vorteilhaft, indem zunächst die Schaufeln des Laufrades gekürzt werden und anschliessend der Strömungskanal zwischen der Nabe des Laufrades und dem Gasaustrittflansch entsprechend verjüngt wird.

In einer weiteren Ausgestaltungsform der Erfindung wird zur Anpassung der Radialturbine eines Turboladers an die Brennkraftmaschine zunächst ein kleineres Laufrad eingesetzt und anschliessend der Strömungskanal zwischen der Nabe des Laufrades und dem Gasaustrittflansch entsprechend verjüngt.

Da die Anpassung an die veränderte Aussenkontur des Laufrades gasaustrittseitig erfolgt, liegen die Vorteile der Erfindung unter anderem im Wegfall des bisher erforderlichen Wechselns der aufeinander abgestimmten gaseintrittseitigen Bauteile, d.h. Gaseintrittgehäuse und Düsenring. Auf diese Weise werden sowohl Aufwand als auch Kosten der Demontage bzw. Montage, der Lagerung und des Transportes dieser Teile sowie der zusätzlichen Bearbeitung des Düsenrings eingespart.

Es ist besonders zweckmässig, wenn der vorhandene Gasaustrittflansch zur Verjüngung des Strömungskanals durch einen anderen, entsprechend den gekürzten Schaufeln des Laufrades vergrösserten Gasaustrittflansch ersetzt wird. Damit ist erfindungsgemäss nur noch ein zusätzliches und wesentlich geringer dimensioniertes Bauteil zu lagern, transportieren sowie anzupassen.

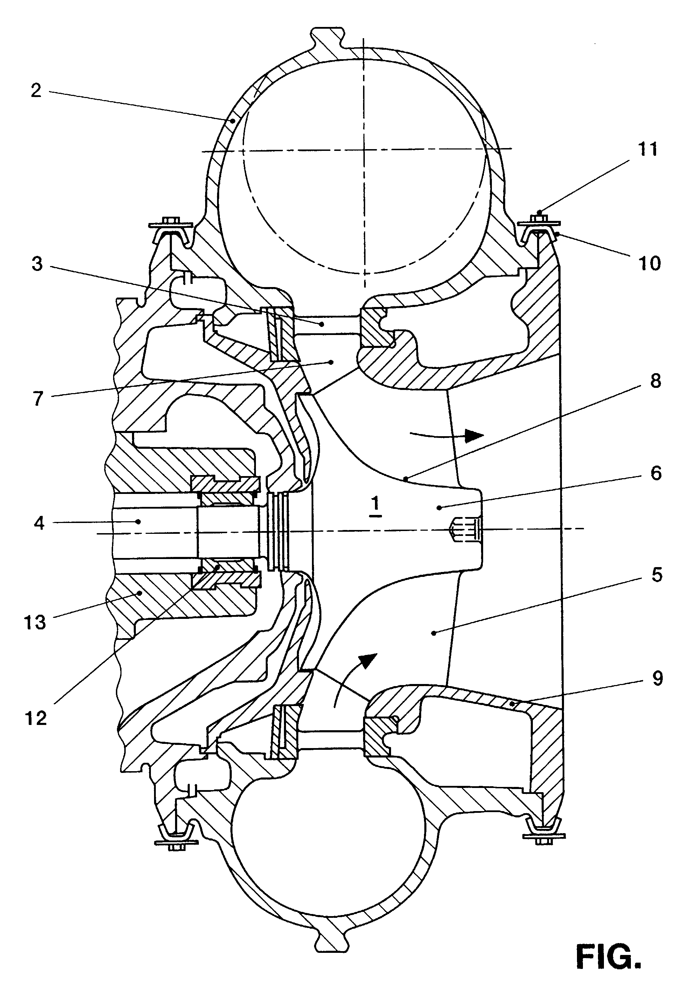

### Kurze Beschreibung der Zeichnung

In der Zeichnung ist ein Ausführungsbeispiel der Erfindung anhand einer Radialturbine dargestellt. Die Figur zeigt einen Längsschnitt durch die Radialturbine, wobei die gasaustrittseitigen Bauteile in der unteren Hälfte dem Ausgangszustand entsprechend und in der oberen Hälfte erfindungsgemäss verändert dargestellt sind.

Es sind nur die für das Verständnis der Erfindung wesentlichen Elemente gezeigt. Nicht dargestellt sind von der Anlage beispielsweise die Verdichterbauteile des Turboladers und dessen Befestigung am Kamin. Die Strömungsrichtung des Arbeitsmittels ist mit Pfeilen bezeichnet.

### Weg zur Ausführung der Erfindung

Die Radialturbine 1 besteht gaseintrittseitig aus einem spiralförmigen Gaseintrittgehäuse 2, welches mit einem Düsenring 3 räumlich abschliesst. Gasaustrittseitig ist auf der Verdichter-Antriebswelle 4 ein mit Schaufeln 5 versehenes Laufrad 6 angeordnet. Der Strömungskanal 7 des Gases wird durch die Nabe 8 des Laufrades 6 und den Gasaustrittflansch 9 gebildet, der seinerseits mittels eines Spannbandes 10 und einer in Umfangsrichtung angeordneten Schraube 11 am Gaseintrittgehäuse 2 befestigt ist. Die Verdichter-Antriebswelle 4 ist mittels Lagern 12 im Gehäuse 13 gelagert.
Der Düsenring 3 ist zwischen Gaseintrittgehäuse 2 und Gasaustrittflansch 9 formschlüssig und leicht lösbar angeordnet.

Zur Anpassung der Radialturbine 1 an eine Brennkraftmaschine wird der Strömungskanal 7 nach dem Kürzen der Schaufeln 5 des Laufrades 6 entsprechend verjüngt. Dies geschieht durch den Einbau eines den gekürzten Schaufeln 5 angepassten, d.h. grösser ausgebildeten Gasaustrittflansches 9. Dieser Austausch kann durch die mittels des Spannbandes 10 und der Schraube 11 leicht lösbare Befestigung des Gasaustrittflansches 9 am Gaseintrittgehäuse 2 besonders schnell erfolgen.

Aufgrund der formschlüssigen und leicht lösbaren Anordnung des Düsenrings 3 zwischen Gaseintrittgehäuse 2 und Gasaustrittflansch 9 lässt sich auch dieser bei Bedarf relativ schnell auswechseln. Dazu wird zunächst ebenfalls der Gasaustrittflansch 9 mittels des Spannbandes 10 und der Schraube 11 vom Gaseintrittgehäuse 2 gelöst und abgenommen. Danach kann der Düsenring 3 aus seiner formschlüssigen Verbindung gezogen und durch einen anderen ersetzt werden. Die Montage erfolgt in umgekehrter Reihenfolge.

In einer weiteren Ausgestaltungsform der Erfindung wird zur Anpassung der Radialturbine 1 eines Turboladers an die Brennkraftmaschine zunächst ein kleineres Laufrad 6 eingesetzt und anschliessend ebenfalls der Strömungskanal 7 zwischen der Nabe 8 des Laufrades 6 und dem Gasaustrittflansch 9 entsprechend verjüngt.

### Bezugszeichenliste

- 1: Radialturbine
- 2: Gaseintrittgehäuse
- 3: Düsenring
- 4: Verdichter-Antriebswelle
- 5: Schaufel
- 6: Laufrad
- 7: Strömungskanal
- 8: Nabe
- 9: Gasaustrittflansch
- 10: Spannband
- 11: Schraube
- 12: Lager
- 13: Gehäuse

## Patentansprüche

1. Verfahren zur Anpassung der Radialturbine eines Turboladers an eine Brennkraftmaschine, wobei die Radialturbine (1)
a) gaseintrittseitig von einem mittels eines Düsenrings (3) räumlich abgeschlossenen Gaseintrittgehäuse (2) und gasaustrittseitig von einem Laufrad (6) mit einer Nabe (8) und mehreren Schaufeln (5) sowie einem mit dem Gaseintrittgehäuse (2) lösbar verbundenen Gasaustrittflansch (9) gebildet wird und einen zwischen der Nabe (8) und dem Gasaustrittflansch (9) ausgebildeten Strömungskanal (7) aufweist,
b) durch Veränderung bzw. Austausch verschiedener Bauteile entsprechend den Anschlussbedingungen der Brennkraftmaschine an diese angepasst wird und dabei ausschliesslich gasaustrittseitige Bauteile der Radialturbine (1) verändert werden.

2. Verfahren nach Anspruch 1, dadurch gekennzeichnet, dass zunächst die Schaufeln (5) des Laufrades (6) gekürzt werden und anschliessend der Strömungskanal (7) zwischen der Nabe (8) des Laufrades (6) und dem Gasaustrittflansch (9) entsprechend verjüngt wird.

3. Verfahren nach Anspruch 1, dadurch gekennzeichnet, dass zunächst ein kleineres Laufrad (6) eingesetzt und anschliessend der Strömungskanal (7) zwischen der Nabe (8) des Laufrades (6) und dem Gasaustrittflansch (9) entsprechend verjüngt wird.

4. Verfahren nach den Ansprüchen 1 bis 3, dadurch gekennzeichnet, dass zur Verjüngung des Strömungskanals (7) der vorhandene Gasaustrittflansch (9) durch einen anderen, entsprechend ausgeformten, d.h. vergrösserten Gasaustrittflansch (9) ersetzt wird.

## Claims

1. Method for matching the radial turbine of a turbocharger to an internal combustion engine,
the radial turbine (1)
a) being formed at the gas inlet end by a gas inlet casing (2) spatially terminated by a nozzle ring (3) and at the gas outlet end by a rotor (6) having a hub (8) and a plurality of vanes (5), and a gas outlet flange (9) connected releasably to the gas inlet casing (2), and having a flow duct (7) formed between the hub (8) and the gas outlet flange (9),
b) being matched to the internal combustion engine by modifying or exchanging various components in accordance with the connection conditions of the said engine and, as this is being done, only those components of the radial turbine (1) which are at the gas outlet end being modified.

2. Method according to Claim 1, characterized in that the vanes (5) of the rotor (6) are first shortened and the flow duct (7) between the hub (8) of the rotor (6) and the gas outlet flange (9) is then correspondingly narrowed.

3. Method according to Claim 1, characterized in that a smaller rotor (6) is first inserted and the flow duct (7) between the hub (8) of the rotor (6) and the gas outlet flange (9) is then correspondingly narrowed.

4. Method according to Claims 1 to 3, characterized in that the existing gas outlet flange (9) is replaced by a different, correspondingly shaped, i.e. enlarged gas outlet flange (9) in order to narrow the flow duct (7).

## Revendications

1. Procédé pour adapter la turbine radiale d'un turbocompresseur sur un moteur à combustion interne, dans lequel la turbine radiale (1)
a) est formée du côté de l'entrée des gaz par un corps d'entrée des gaz (2) spatialement fermé au moyen d'une couronne directrice (3) et du côté de la sortie des gaz par une roue mobile (6) avec un moyeu (8) et plusieurs aubes (5) ainsi qu'avec une bride de sortie des gaz (9) assemblée de façon amovible au corps d'entrée des gaz (2) et présente un canal d'écoulement (7) formé entre le moyeu (8) et la bride de sortie des gaz (9),
b) est adaptée au moteur à combustion interne par modification respectivement échange de différents composants en fonction des conditions de raccordement de celui-ci et seuls des composants de la turbine radiale (1) du côté de la sortie des gaz sont modifiés.

2. Procédé suivant la revendication 1, caractérisé en ce qu'en premier lieu les aubes (5) de la roue mobile (6) sont raccourcies et ensuite le canal d'écoulement (7) entre le moyeu (8) de la roue mobile (6) et la bride de sortie des gaz (9) est rétréci dans une mesure correspondante.

3. Procédé suivant la revendication 1, caractérisé en ce qu'en premier lieu une roue mobile (6) plus petite est installée et ensuite le canal d'écoulement (7) entre le moyeu (8) de la roue mobile (6) et la bride de sortie des gaz (9) est rétréci dans une mesure correspondante.

4. Procédé suivant les revendications 1 à 3, caractérisé en ce que, pour le rétrécissement du canal d'écoulement (7), la bride de sortie des gaz existante (9) est remplacée par une autre bride de sortie des gaz (9), profilée de manière correspondante, c'est-à-dire agrandie.
